(19) **Europäisches Patentamt / European Patent Office / Office européen des brevets**

(11) **EP 1 386 675 B1**

(12) **EUROPEAN PATENT SPECIFICATION**

(45) Date of publication and mention
of the grant of the patent:
**21.03.2012 Bulletin 2012/12**

(51) Int Cl.:
***B09B 3/00*** *(2006.01)*     ***B03B 9/06*** *(2006.01)*

(21) Application number: **03009406.4**

(22) Date of filing: **25.04.2003**

(54) **Fermentable waste stabilisation plant and method**

Anlage und Verfahren zum Stabilisieren vergärbarer Abfälle

Installation et méthode de stabilisation de dechets fermentescibles

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **06.06.2002 IT BS20020055**

(43) Date of publication of application:
**04.02.2004 Bulletin 2004/06**

(73) Proprietor: **ECODECO S.r.l.**
**20122 Milano (IT)**

(72) Inventors:
• **Calcaterra, Enrico**
**27010 Giussago (Pavia) (IT)**

• **Donati, Gianni**
**27010 Giussago (Pavia) (IT)**
• **Natta, Giuseppe**
**27010 Giussago (Pavia) (IT)**

(74) Representative: **Minoja, Fabrizio**
**Bianchetti Bracco Minoja S.r.l.**
**Via Plinio, 63**
**20129 Milano (IT)**

(56) References cited:
**EP-A- 0 706 839     FR-A- 2 812 570**
**GB-A- 974 047     IT-B- 1 297 234**
**US-A- 4 203 376**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

EP 1 386 675 B1

**Description**

**Field of application**

This invention relates to a plant and method for the stabilisation of fermentable waste, and especially the organic and wet fractions of solid waste.

In particular, this invention relates to a plant and a method of the type comprising forced aerobic fermentation of waste in a closed environment, followed by refining of the dried and stabilized material.

Further aspects of the invention relate to the plant control system and the product obtained by said method.

Some of the possible applications of this invention are the disposal of waste containing a fermentable fraction such as municipal solid waste (MSW) obtained from treatment of the residual moist fraction of separately collected MSW and from drying and stabilisation of biomasses.

**Prior art**

Solid household and industrial waste originating from non-selective collection is usually compacted and sent to controlled landfills with a waterproof base.

They usually include a readily fermentable fraction consisting of wet organic residues, a non-combustible inorganic fraction consisting of glass, demolition residues and metals, and a combustible fraction comprising packing material and materials made of plastic, wood, cardboard and paper.

The increasing production of waste and the consequent need for further space for controlled landfills has led to the development of disposal methods alternative to land filling.

A characteristic common to such alternative methods is recovery and recycling of at least a fraction of the waste. Said fraction can be recovered and energy can be obtained from combustion of the waste.

Known energy recovery methods involve combustion of chopped waste in fluid-bed combustion chambers.

Some drawbacks of said known methods are the considerable complexity of the plant required to manage such different materials, the need to control and eliminate noxious emissions, the large amount of ash deriving from the incombustible inorganic fraction and the low thermal efficiency, partly due to the presence of large masses of water which must be evaporated.

The net energy obtained by said processes, defined as the difference between the quantity of energy obtained and the quantity of energy expended to obtain it, is rather limited.

Methods are also known whereby energy recovery is performed with an "unconventional" fuel or RDF *(Refuse Derived Fuel),* obtained from waste by separating at least part of the inorganic fraction and part of the highly fermentable fraction.

One drawback of said known methods is the difficulty of separation, which generally produces polluted fractions of little value or usability. In particular, the combustible fraction contains a proportion of wet and fermentable material, leading to a reduction in net heat value and the formation of foul-smelling substances with the development of bacteria and pathogenic germs.

Moreover, biomasses usable for energy generation can advantageously be obtained from agricultural "set-aside" land, no longer used for intensive farming. Biomasses also contain a wet, fermentable fraction which, if used directly, limits their lower heat value.

Hereafter, the term "waste" will be used to refer to municipal solid waste (MSW) such as that originating from non-selective collection, waste originating from separate collection, fractions containing fermentable material separated from said waste, biomasses originating from set-aside land, and biomasses contained in refuse or waste originating from other agricultural and/or industrial processes or from purification of effluent containing a fermentable organic fraction.

In order to be efficiently usable, waste must meet a number of minimum requirements; in particular a water content of under 20% and a pre-defined lower heat value are required.

Known methods for preparation of wastes use the heat generated by aerobic fermentation of the fermentable fraction of the waste to reduce the amount of water present.

EP-A-706839, filed by the same applicant, describes a method for recovering energy from solid waste by preparing unconventional fuel which includes stages of coarse crushing of the waste, accumulation of the waste on a porous bed in a fermentation chamber, forced fermentation at a temperature of up to 65-70°C until drying of the waste, conducted by passing aspirated air through the waste, removal of odors from the air output with bio filters, refining by sieving, removal of metals, and grinding of the remaining fraction to produce a maximum final diameter of under a centimeter.

The waste is placed in the fermentation chamber in layers, which may be very thick, and air at a high flow rate passes through said layers. After an induction period, the oxygen contained in the air causes forced aerobic fermentation, with production of heat and carbon dioxide.

FR-2812570 refers to the anaerobic fermentation of domestic and industrial waste for producing methane. The control of temperature and humidity is made by adding water to the waste.

Italian patent IT 1283805 discloses a method for recovering energy from solid waste which includes an initial crushing stage to homogenize the waste and limit the formation of local sacs of anaerobic fermentation, and a stage of forced fermentation of the waste until dry. The air flow removes water, and fermentation stops when the remaining water is insufficient to support it. No water is added during the process. The dry fermented waste is ground to a size of 3 cm, and aggregates, metals, glass and demolition material are removed. The residue obtained is sent directly for combustion or loaded into containers for road transport.

Italian patent IT 1297234 describes a method of refining a refused derived fuel (RDF) which comprises stages of screening to extract fine aggregates, extraction of metals with magnets and induced currents, grinding in a fast hammer mill, and pressing of the crushed material in large containers, preferably semi-trailers, which have a mobile base and an extraction screw for transport at the point of use.

The fermented material obtained, which is ready for combustion, must be not only dry, but also stabilised and sanitized.

Waste is defined as dry when the water content is under 20%. Under these conditions fermentation ceases, but is only inhibited, and resumes rapidly if the water content increases.

Fermented waste is defined as stabilised when the readily fermentable fraction has been entirely consumed. In the presence of moisture, including added moisture, the waste no longer ferments, and does not produce foul-smelling substances.

Fermented waste is said to be sanitized when the pathogenic germs have been destroyed by being subjected to a temperature exceeding 60°C for at least 20 hours.

The main drawback of the methods described above is the complex management of the plant, mainly due to the heterogeneity of the waste and the natural variations in its type and composition over time. Management of the plant which does not take account of said variations leads to a considerable decline in production or incomplete fermentation, and the waste formed is only dried, but not stabilised or sanitized, and still contains a fermentable fraction, the fermentation of which resumes spontaneously in the event of deliberate or accidental humidification, leading to the emission of foul-smelling substances.

The upper part of the layer, through which all the air passes, dries rapidly, whereas the lower part, through which humid air continually passes, is completely fermented, but remains moist or only partly dried. The high moisture level also causes partial fermentation of the less readily putrescible constituents, leading to loss of combustible material and a consequent reduction in energy recovery.

A further drawback of said known methods is the variation in induction time, typically due to the difference in temperature and humidity of the waste as delivered and the air input between the warm, damp season and the cold, normally dry season.

Another drawback is due to the fact that fermentable material can be present in very high concentrations. This causes a considerable production of heat per unit of volume, leading to an excessive temperature increase.

The drawbacks referred to above produce significant declines in production capacity and collection material receiving capacity, and excessively isothermal fermentation.

## Disclosure of the invention

The main purpose of the invention is to eliminate said drawbacks by providing a plant and a method optimized for the production of stabilised, dry RDF with a high net heat value.

A particular purpose is to provide a plant and a method for the production of RDF which takes account of variations in the composition and reactivity of the waste to be stabilised.

Another purpose is to provide a fully-automated plant and method for the production of RDF which is simple and cheap to run.

A particular purpose is to provide a method for the production of sanitized RDF, with a low bacteria count and no pathogenic germs.

A further purpose is to provide a method for the production of a stabilised RDF fuel which is practically odorless and non-fermentable, even in the presence of external humidity.

These purposes, and others which will be more particularly described hereafter, are achieved by a plant for the biological stabilisation of waste containing putrescible fractions, especially solid waste according to claim 1, by forced fermentation.

The plant comprises a substantially closed fermentation chamber with pre-determined dimensions, a support surface divided into sectors which is installed in said chamber for the purpose of stratified deposit of waste, and which contains openings distributed uniformly in said sectors for the passage of air, means for coarse crushing of the waste, means for deposit of the crushed waste on said support surface in each sector and for the transfer of waste between the various sectors and between the various areas of the plant, means for aspiration of air from above and conveyance of said air through the openings in said support surface so that it passes through the waste stratified on said surface and promotes its forced fermentation, and means for regulation of the air flow aspirated in each sector, which said plant is characterised in that it includes first sensor means for detection of the temperature of the air aspirated upstream and downstream of the stratified waste in each sector, second sensor means for detection of the humidity of the air aspirated upstream and downstream of the stratified waste in each sector, third sensor means for detection of the air flow rate downstream of the waste in each sector, a computerized control unit designed to process the signals originating from said first, second and third sensor means and said means of regulating the air flow in each sector, said computerized control unit being equipped with a suitable program to activate said air flow regulation means automatically in order to control the fermentation temperature in each sector accordingly, so as to accelerate fermentation of the waste on the basis of its composition, nature and degree of fermentation.

A further aspect of the invention involves a method for constructing the plant according to claim 10.

This method and this plant produce a dry, sanitized RDF fuel with a net energy recovery sufficient to repay the investment.

## Brief description of drawings

Further characteristics and advantages of the invention will be made clear by the detailed description below of a plant and method for stabilisation of biological waste by forced fermentation, which said description is provided by way of example but not of limitation, with the aid of the annexed drawings
wherein:

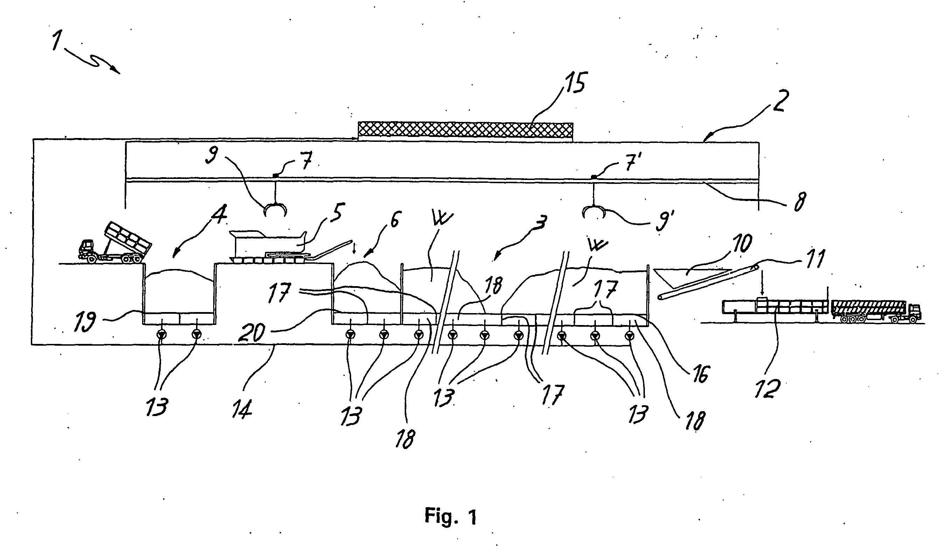

FIG. 1 is a diagram of the waste stabilisation plant which forms the subject of this invention;

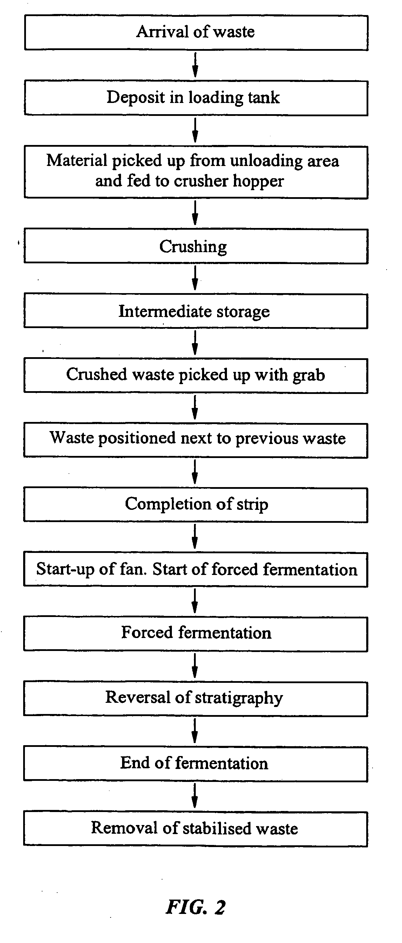

FIG. 2 is a block diagram of the method applied to the plant shown in FIG. 1;

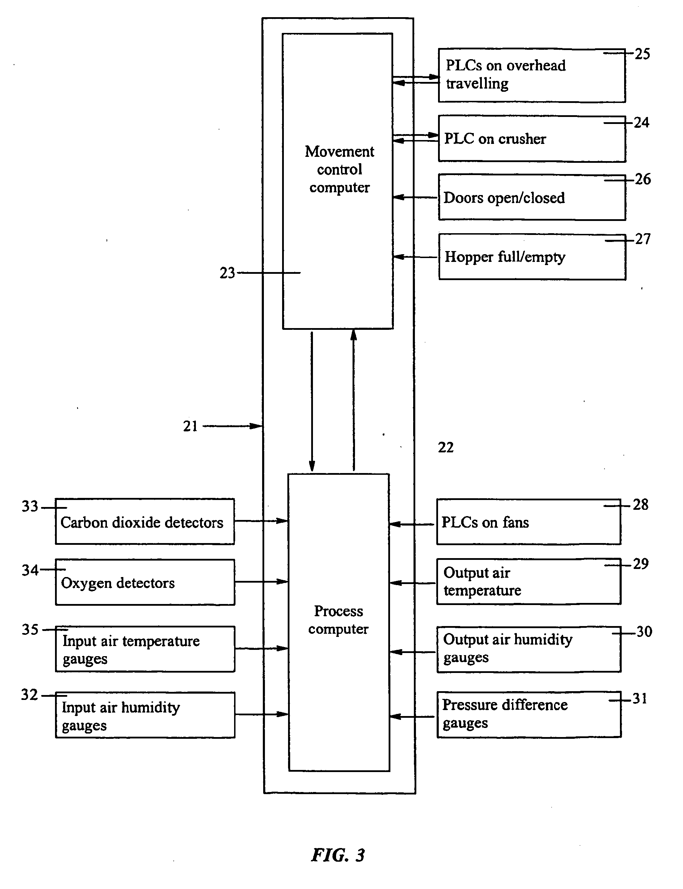

FIG. 3 is a functional block diagram of the process control of the plant shown in FIG. 1;
FIG. 4 is a schematic representation of a unit volume of fermenting material to which mass and energy balances are applied;
FIG. 5 is a functional diagram of the fermentation control system;
FIG. 6 shows the variation in the moisture content of the waste over time.

## Detailed description of an example of a preferred embodiment

A plant designed for the fermentation and stabilisation of waste W is indicated globally as no. 1 in the annexed figures.

Plant 1 comprises a single closed building 2 with a substantially rectangular layout, an area 3 which constitutes the fermentation chamber in which forced fermentation takes place, a feed area 4 in which waste W discharged from the refuse truck is collected, a crusher 5 situated at a higher level than the waste support surface, and an area 6 for gravity collection of the crushed waste.

The plant includes handling means constituted by overhead travelling cranes 7, 7' that run on tracks 8, are entirely free to move, and cover the entire area of building 2, long-tooth grabs 9, 9' associated with the overhead travelling cranes, and a hopper 10 for loading conveyor belt 11 that conveys the stabilised waste to system 12, which loads the semi-trailers.

Fans 13, 13', 13",... for aspiration of the fermentation air are connected via manifolds 14 to biofilters 15, which purify the aspirated air.

According to another form of embodiment, belt 11 feeds a refining section, not shown in the figure, designed according to the prior art, which could easily be constructed by one skilled in the art.

Said section can include a first and possibly a second grinding stage, extraction of the metal fraction with magnets and induced currents, and separation of the non-combustible inert fraction by sieving.

Feed area 4, which has an overall capacity sufficient to contain at least the maximum quantity of waste used in one day's work, consists of one or more sectors, each bounded by reinforced concrete walls, and is fitted with loading hatches communicating with the exterior and aspiration apertures on the base.

Space 6, which serves for gravity collection of crushed waste and temporary storage, will preferably have a capacity sufficient for an entire day's work. For this purpose, it will be demarcated by side walls made of reinforced concrete and will be connected to suction fans. The rails which allow crusher 5, positioned on a movable bridge, to serve all points of temporary storage area 6, can be installed on the side walls.

Fermentation area 3 preferably occupies over 80% of the area of the entire building 2. Waste support surface 16 contains openings, not shown in the drawings, for the passage of the air needed for fermentation. The space under said support surface is connected to suction fans 13 via plastic and/or stainless steel pipes.

The partition walls of the structure can be made of load-bearing reinforced concrete panels which support the thrust caused by the waste positioned in it. The roof, made of prefabricated panels and composite completion casting, is flat, and has a sufficient capacity to receive suction fans 13, manifold 14 and deodorising biofilters 15.

Coarse crushing means 5 could be constituted by an electrohydraulic cutting machine, for example with a double shaft and slow rotation (approx. 60 rpm), fitted with two counter-rotating shafts with cutting blades. The action principle is tearing and cutting. This type of crusher combines the high productivity of fast hammer mills with the uniform size of the crushed material produced by blade mills with a number of slow shafts; moreover, unlike hammer mills, which are often subject to explosion following the introduction of unsuitable material such as combustible gas cylinders, slow rotation guarantees high security in the presence of such materials.

Waste with a size of under 500 mm is thus obtained, with no closed sacs in which anaerobic fermentation and methane production could be triggered.

The waste is handled by overhead travelling cranes 7, 7', which are equipped with electrohydraulic grabs 8, 8' able to cover the entire area of building 2, including fermentation area 3, feed area 4 and collection area 6.

To limit maintenance and improve the grip of the grab, the jaws are formed by long, narrow teeth.

According to this invention, support surface 16 is constituted by a raised floor made of prefabricated reinforced concrete panels containing uniformly distributed openings, not shown in the annexed drawings, which said panels rest on continuous foundation walls 17, 17', 17",....

Foundation walls 17, 17', 17",... are preferably parallel to one another and arranged transversally to the longitudinal axis of building 2. They can consequently define a plurality of suction cells 18, 18', 18",.. which are substantially parallel to one another, and correspond to sectors S, S', S",... of support surface 16 above.

Each of suction cells 18, 18', 18",.. and the corresponding sector S, S', S",... of support surface 16 can be connected via pipes that run along the walls of the building to a suction fan 13 on the roof.

According to the invention, fermentation of the layer of waste above each sector S of support surface 16, which in turn corresponds to a suction cell 18, is activated substantially independently of fermentation of the layer of waste adjacent to it.

Individual sectors S, S', S",... in fermentation area 3 are preferably not demarcated by walls or other enclosing or separation structures.

Advantageously, the electric motors of fans 13 will be controlled by inverters, not illustrated in the drawings, which can vary the number of revolutions up to the highest possible speed.

The air flow sucked through the layer of waste W and perforated floor 16 can be collected and mixed in a manifold 14. Said manifold mixes the flows originating from the suction cells, corresponding to sectors of the support surface, with waste W at different stages of fermentation, and equalizes the concentrations of pollutants and moisture so that the composition of the air fed to biofilters 15 is constant.

Management of the biofilters is optimized in this way. The absorption, removal and destruction of foul-smelling organic substances in the air originating from fermentation is substantially complete, and plant 1 does not release any unpleasant or toxic emissions to the exterior.

To prevent the dispersal of foul-smelling substances, floors 19 and 20 of waste acceptance and plant feed areas 4 and crushed waste intermediate storage area 6, which are not involved in the fermentation process, can be constructed in the same way as support surface 16 in chamber 3, and can be connected to suction manifold and mixer 14.

A computerized control unit 21, comprising at least one process computer 22 for the control and management of fermentation and at least one process computer 23 for the control and management of handling, can be installed to control and manage the plant.

It is also possible to install a microprocessor control system 24 associated with crusher 5, microprocessor control systems 25 associated with each overhead travelling crane 7, 7', detectors 26 of the open/closed status of the fresh waste loading hatches and the openings for emergency and maintenance work, and detectors 27 of the full/empty status of the loading hoppers of crusher 5 and belt 11.

Said systems can be connected to computerized control unit 21 via a network such as the Ethernet[TM] type or a radio-frequency link for real-time data transmission and reception.

A microprocessor control system 28, associated with each feed and control board of suction fans 13 and connected to computerized control unit 21 via the real-time data transmission and reception network, could also be installed.

In operational terms, for reasons of safety and reliability, there can be any number of process computers 22 and 23, provided that they are substantially equivalent to one another and each able to control both fermentation and handling alone.

Means of communication and/or sound warning devices and/or optical warning devices not shown in the annexed figures may be connected to process computers 22 and 23 to enable operators to interact.

Temperature detection probes 29, humidity-detecting sensor elements 30, and differential pressure gauges 31 for calculation of loss of head through the waste bed and of the air flow, all connected via a network to computerized control and management unit 21, can be fitted on the delivery side of each fan 13, which is served by and connected to a suction cell 18.

According to one embodiment of the plant according to the invention, sensor elements 32 designed to detect the carbon dioxide concentration, and sensor elements 33 designed to detect the concentration of oxygen, can be fitted on the delivery side of each fan 13 and connected to computerized control unit 21.

Sensor elements 34 and 35, connected to control and management computer 22 and designed to detect the temperature and humidity respectively, can be positioned in the upper part of area 3 not occupied by waste.

The flow rate can also be measured indirectly, simply by recording the absorption of the electric motor of each fan 13 at the same number of revolutions.

The waste is unloaded into outlet tanks 4, from which it is picked up by overhead travelling crane 7 and deposited in the hopper of crusher 5.

The purpose of this operation is to reduce the size of pieces exceeding 500 mm and cause breakage of the bags or containers, in order to eliminate any sacs of anaerobic fermentation. Crushed waste W is stored temporarily in temporary storage tank 6, then picked up by overhead travelling crane 7 and deposited in fermentation chamber 3 according to the criterion of progressive deposit in strips, so that the accumulated waste is always in contact with that of the previous day.

Advantageously, each strip corresponds to a sector S of the support surface and a corresponding suction cell 18. Process computer 22 stores the time coordinates (date and time) and spatial coordinates of each deposit, the latter being detected by the position of the grab relative to the perimeter walls and the girder of overhead travelling crane 7.

This method allows the waste deposited to be managed simply and efficiently, and at the same time indicates the time spent by the material in the tank very efficiently on the basis of its position.

When an entire strip or sector S which corresponds to a suction cell 18 has been completed, fan 13 connected to it is activated, and the downward air flow necessary for the biological process is triggered.

The exothermic biological processes that break down fermentable organic waste are enhanced by forced aeration. The exothermia of the process contributes to the evaporation of the water present in the waste.

The process terminates naturally when the water content of the fermentable part falls below the threshold of 12% in weight, at which biological stasis takes place.

The air aspirated by fans 13 passes through the mass of waste and is conveyed to biofilters 15 installed on the roof.

The biofilters are known, and could easily be designed, constructed and managed by one skilled in the art.

According to a variation on the method to which this invention relates, during fermentation the waste is picked up and repositioned in another sector or strip to form a new layer of waste whose position is the reverse of that of the layer from which it was picked up. Thus waste previously in the lower position, which is much more moist, is placed in the upper position, and waste previously in the upper position, which is drier but not completely fermented, is placed in the lower position. In this way, dry but unstabilised waste is rehumidified by the air and fermentation is resumed and continues until the fermentable fraction has been entirely consumed.

The biological process generally takes approx. 12 -14 days.

Completion of the process, established from the temperature and humidity values of the air output from each suction cell, which correspond to completed fermentation, enables handling control computer 23 to discharge the stabilised waste.

According to a further embodiment, the enable is generated when a pre-set time is exceeded.

The material is picked up by overhead travelling crane 7 and unloaded into an extraction system 11 which conveys it to compacting press 12 for subsequent loading of the treated material onto a truck and transport to the place of use or refining system.

The stabilisation and drying process is controlled by modulating the forced aeration on the basis of variations in the state of fermentation.

If the quantity of air is excessive, the thermodynamic balance of the mass of waste will be unstable, temperature T of the fermenting mass will decline, and the process will be strongly inhibited, and may even be interrupted.

This would obviously only be a temporary interruption, because the process would resume spontaneously in the presence of fermentable organic matter and water.

Current value T of the fermentation temperature can subsequently be considered equal to value $T_2$ of the temperature of the air exiting from the waste.

According to this invention, fermentation can be controlled according to two criteria.

According to the first control criterion, once coverage of a sector or strip S which corresponds to a suction cell 18 has been completed, fan 13 corresponding to an initial velocity $V_{start}$, predefined on the basis of experience, is activated. After time $Dt_{start}$, the first temperature reading delay, if measurement $T_2$ obtained from sensors 29 is below the threshold limit, fermentation has not begun and the anomaly is signalled; if it is greater than $T_{ottsup}$, the upper temperature that defines the optimum range for the process, the fan speed is corrected by a quantity Dv which increases or decreases said fan speed; if measurement $T_2$ is above the threshold limit and below $T_{ottinf}$, the lowest temperature that defines the optimum process range, the fan speed will be reduced by quantity Dv. The measurement and correction cycle is repeated so that the temperature always falls within the range $T_{ottinf}<T<T_{ottsup}$. The fan speed will always exceed $V_{min}$, which is the minimum speed of the fan regardless of the check.

$T_{ottinf}$, $T_{ottsup}$, $T_{inf}$ and $T_{sup}$ are pre-defined values; they depend on time t and the lower and upper temperatures, which are obtained on the basis of previous experience. They define the optimum time/temperature operating range and the admissible range respectively; the latter is independent of the management criterion, and must always be maintained.

More opportunely, according to a second criterion, management of fermentation is optimized by using an algorithm which includes the enthalpy balance of the fermentation and the degree of fermentation of the waste.

"Degree of fermentation" means the quantity of fermentable waste fermented as a proportion of the total amount of fermentable waste initially present. It expresses the progress of fermentation over time.

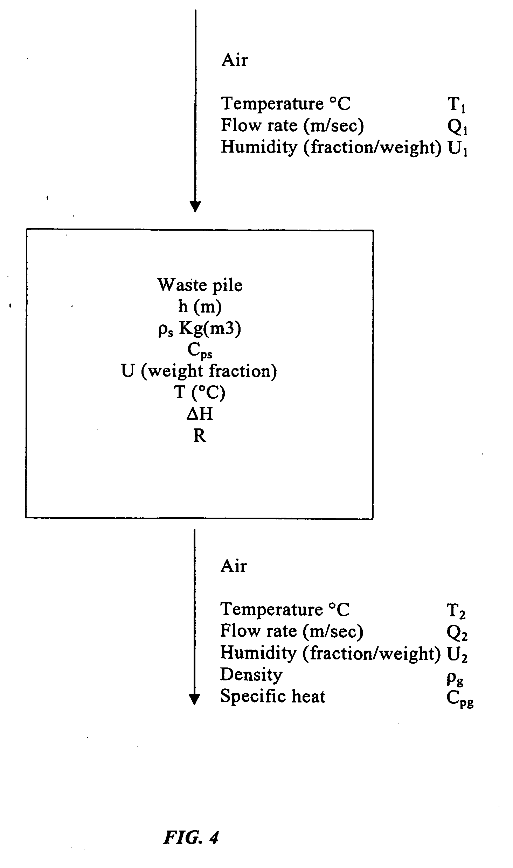

With reference to the annexed fig. 4, the enthalpy balance around a unit volume of fermenting waste for a significant time interval Dt is given by:

$$\text{(heat accumulated in solids)} = \text{(heat generated)} + \text{(water evaporation heat)}$$

$$\text{(sensible heat from air)} \qquad\qquad [1]$$

namely with reference to 1 $m^2$ surface, h height unit volume

$$h\,\rho_s\,C_{ps}\,dT/dt = R\,\rho_s\,\Delta H\,h - Q_1(U_2 - U_1)\,\Delta H_w - Q_1\,\rho_g\,C_{pg}\,((1+U_2)T_2 - (1+U_1)T_1)$$

wherein

T is the current value of the waste temperature, expressed in °C
$T_1$ is the value of the temperature of the air input into the waste, expressed in °C, measured in the free upper part of fermentation cell 3
$U_1$ is the value of the moisture in the air input into the waste, expressed in kg of water per kg of dry air, measured in the free upper part of fermentation chamber 3
$Q_1$ Flow rate of dry air input into waste per surface unit of the support surface, expressed in m/sec
$T_2$ is the value of the temperature of the air output from the waste, expressed in °C, measured on the delivery side of the fan
$U_2$ is the value of the moisture of the air output from the waste, expressed in kg of water per kg of dry air, measured on the delivery side of the fan
$Q_2$ Flow rate of dry air output from waste per surface unit of the support surface, expressed in m/sec
$\rho_s$ Density of waste layer, expressed in kg/m
$C_{ps}$ specific heat of waste layer, expressed in kcal/kg °C
h Height of waste layer, expressed in meters
$\rho_g$ Density of moist air (kg/m)
$C_{pg}$ Specific heat of moist air (kcal/kg °C)
R Kinetic parameter ($t^{-1}$)
$\Delta H$ Heat of reaction, expressed in kcal/kg of dry solids
$\Delta H_w$ Heat of water evaporation expressed in kcal/kg of water

The values of parameter R, the kinetic constant, and parameter $\Delta H$, the heat of reaction, depend on the type of waste, in particular the putrescible fraction, and its moisture content, and express the nature and composition of the waste in the mass and energy balance equations.

Equation [1] links the values of $T_1$, $U_1$, $Q_1$, $T_2$, $U_2$ and $Q_2$. Flow rate $Q_2$ of the output air sucked through support surface 16, evaluated on the dry base, is equal to the input flow rate $Q_1$, again expressed on the dry base. It has been experimentally demonstrated that air temperature $T_2$ is equal to that of the pile of waste.

Humidity $U_2$ corresponds to the saturation value, and can easily be calculated, with an equation of the following type, for example:

$$U_s = T/100 \exp(-(1050+(100-T)) (1-T/100)/(273+T)) \qquad [2]$$

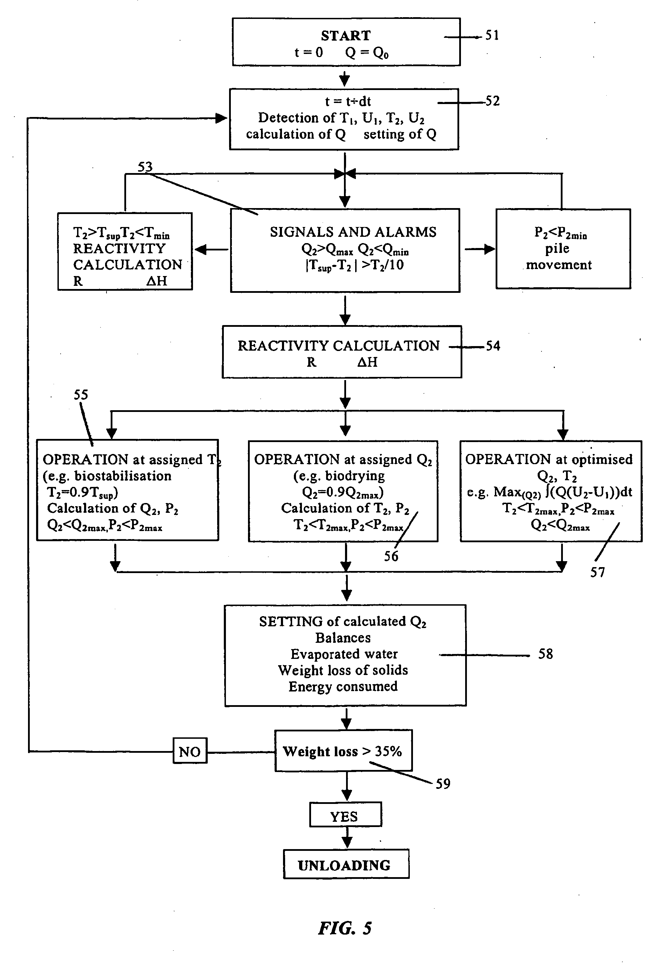

As shown in FIG. 5, at the stage indicated as no. 51, fans 13 are started when the coverage of sector S (which corresponds to suction cell 18) has been completed, at initial time t=0.

After a first time interval $Dt_{start}$, which is necessary to commence fermentation, after checking that temperature $T_2$ exceeds the threshold, temperature $T_1$ and humidity $U_1$ of the air above the layer of waste are measured at stage 52. Using a pre-set value of temperature $T_{2ott}$ corresponding to the optimum temperature/time profile obtained from the preceding experiments, resolving equation [1] allows calculation of the air flow rate Q necessary to control the temperature at the pre-set value $T_{2ott}$ and regulate the fan inverters to achieve it.

At stage 53, after a second time interval Dt, the values of the parameters calculated are compared with the measured values of said parameters, and any necessary alarm signals are generated.

The width of time interval Dt is significant for the phenomena taking place. For the fermentation of waste according to this invention, it can be the characteristic time of the system, namely the time required for the air to pass through the waste bed.

If the difference between the calculated value of $T_2$ and the measured value of $T_2$ exceeds a pre-set value, such as $T_2/10$, the anomaly is signaled.

If the value of $T_2$ falls outside the range $T_{inf}<T_2<T_{sup}$, it will be necessary to recalculate the values of ∆H, R, flow rate Q and temperature $T_2$, which must fall within the range $T_{inf}<T_2<T_{sup}$.

If the measured value of flow rate $Q_2$ is greater than $Q_{2max}$ or less than $Q_{2min}$, the anomaly will be signaled and the value of flow rate $Q_2$ will be fixed within the range $Q_{inf}<Q_2<Q_{sup}$, while complying with the previous temperature constraints.

If the measured value of $P_2$ is less than $P_{2min}$ the waste is too tightly packed or the layer is too high; the anomaly will be signaled and an operative's intervention requested to remove part of the waste.

After a further time interval Dt, a new value of ∆H R (heat generated in the time interval) is calculated at stage 54, with equation [1], using the values of T and Q just measured. Said new value will be used to calculate flow rate Q in the successive time intervals Dt.

In a first embodiment of the present invention, which gives priority to biostabilization, temperature $T_2$ is kept fixed throughout the duration of fermentation.

Advantageously, the value of temperature $T_2$ can be close to the maximum value $T_{sup}$, for example 9/10th of $T_{sup}$.

According to this embodiment, at stage 55, resolving equation [1] allows calculation of the air flow rate Q necessary to control the temperature at the value $T_2$ pre-set in this way, and enables the fan inverters to be activated to implement it.

At stage 58, after a further time interval Dt, the quantity of water removed in the time interval and since the start of fermentation, and the corresponding weight loss of the waste (degree of drying), are calculated, simply by using $(U_2-U_1)Q$.

When the loss of weight for each sector corresponding to a suction cell is greater than the pre-determined value, for example 35%, and temperature $T_2$ is less than $T_{inf}$, the overhead travelling crane and grab are enabled to remove and discharge the stabilised material at stage 59.

If the weight loss is less than the pre-set value, the control cycle recommences at stage 52.

In a second embodiment which gives priority to biodrying, indicated globally by number 56, flow rate $Q_2$ is kept constant throughout the fermentation time.

Advantageously, the value of said flow rate $Q_2$ will be equal to 9/10th of the value of $Q_{sup}$.

Resolving equation [1] allows calculation of the value of temperature $T_2$, which must fall within the range $T_{inf}<T_2<T_{sup}$.

According to a third embodiment, globally indicated as no. 57, priority is given to optimizing the conduct of fermentation by means of an objective function to be minimised or maximised, which said function expresses greater economy of management.

Advantageously, this function may express the total time necessary, which is to be minimised, the total quantity of air used, which is to be minimised, or the total quantity of water to be removed, which is to be maximised.

In operational terms, according to this latter variation, the flow rate Q which maximizes the total quantity of water extracted is calculated for each cycle, expressed as $\int(Q(U_2-U_1))dt$, and the fan inverters are regulated to implement it.

Resolving equation [1] for various flow rates Q allows calculation of the value of temperature $T_2$, the quantity of water extractable from the system and the corresponding values of $U_2$ and $U_1$, by means of [2], and therefore the optimum dry air flow rate Q.

This flow rate is applied in the next time interval by regulating the fan inverters.

The waste thus stabilised has a net heat value exceeding 17000 kJ/kg (4000 kcal/kg) of dry matter, and a bacteria count, expressed as total coliforms per gram of dry matter, of less than $10^5$.

The operational variables to be used in the next time interval are thus established, and long-term forecasts made for optimisation of the entire process.

Said values are also compared with the historical values to construct a database to allow better optimisation of management.

Enthalpy balance equation [1] may be supplemented or replaced by similar equations which express the mass balance, performed around an infinitesimal element (as shown in fig. 4) of a single constituent which is consumed or produced in the fermentation reaction.

For example, breakdown of the organic fraction consumes oxygen and produces carbon dioxide: for both analytes, a balance equation can be written from which flow rate $Q_2$ is obtained using the concentration values detected in the air before and after it passes through the layer of waste.

## EXAMPLE

A plant for the treatment of 60,000 t/year of fresh MSW is constituted by a building 2, approx. 150 meters long, comprising a fermentation chamber 3 without internal partitions, with an area of approx. 1500 $m^2$, made of load-bearing reinforced concrete panels up to a height of approx. 6 - 7 meters so as to withstand the thrust generated by the waste positioned internally in layers up to 7 meters high, a feed area 4 measuring approx. 100 $m^2$, a temporary crushed waste storage area 6 measuring approx. 250 $m^2$, both demarcated by reinforced concrete walls, a crusher with two shafts rotating at 60 rpm, installed power 250 kW, output between 25 and 30 t/hour of SW, two twin-girder overhead travelling cranes with a capacity of 6.2 t, gauge 21 m; longitudinal movement along the entire length of the shed, elevation at hook approx. 10 m; equipped with grabs having a capacity of approx. 4 $m^3$ each. The power supply is provided by sliding contacts (bus ducts), while the on-board PLC is linked to the computer in the control room by a radiofrequency system. The control room does not communicate with the areas containing the fermenting material.

After fermentation, the stabilised waste is transferred by conveyor belts to the vehicle loading press, constituted by a channel with a square cross-section measuring 2.5 x 2.5 m, and a total length of 22 m. The compacting truck, connected to the hydraulic thrust system, runs inside this channel. When the entire press has been filled, the piston transfers material to the transport semi-trailer, which has a capacity of approx. 80 $m^3$.

The stabilised waste thus obtained has a total water content of under 16% in weight, measured as weight loss at 105°C on a significant sample of the composition of the waste.

Each suction cell, approx. 4 m wide, is interlocked to a suction fan with an installed power of 11 kW which, in turn, is driven by control boards that include a PLC connected to the control computer.

The purification biofilters have a passage surface of approx. 800 $m^2$ (approx. 1 $m^2$ per 100 $Nm^3$/h of process air) and a filter bed approx. 1 m long consisting of peat, branches and bark, with humidity kept constant at approx. 60% in weight.

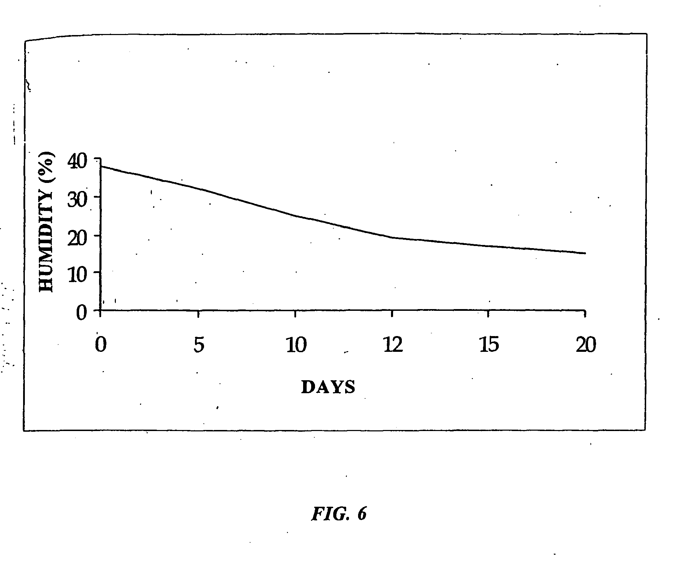

FIG. 6 shows the typical residual humidity trend in the SW mass over time.

## Claims

1. Plant for the biological stabilisation of fermentable waste, comprising:

   - a fermentation chamber (3) which is substantially closed, with pre-determined dimensions;
   - a support surface (16) divided into sectors (S, S', S",...) that is located in said chamber (3) for stratified deposit of waste (W), which said support surface (16) contains openings distributed uniformly in said sectors (S, S', S", ....) for the passage of air;
   - means (5) for coarse crushing of waste (W);
   - means (7, 8, 9) for deposit of crushed waste on said support surface (16) in each sector and for the transfer of waste between the various sectors (S, S', S",...) and between the various areas of the plant;
   - means (13, 13', 13",...) for aspirating air from above and conveying it through the openings in said support surface (16) so that the air passes through the stratified waste on said surface and promotes its forced fermentation;
   - means for regulation of the flow rate of the air aspirated in each sector (S, S', S",...);

   said plant further including first sensor means for detection of the temperature of the air aspirated upstream (34) and downstream (29) of the stratified waste in each sector, second sensor means for detection of the humidity of the air aspirated upstream (35) and downstream (30) of the stratified waste in each sector, third sensor means (31) for detection of the air flow rate downstream of the waste in each sector, a computerized control unit (21) designed to process the signals originating from said first, second and third sensor means and to said means of regulation of the air flow in each sector, a suitable program being installed in said computerized control unit (21) to automatically control said means of regulation of the air flow rate and control the fermentation temperature (T) in each sector accordingly, so as to accelerate fermentation of the waste on the basis of its composition, nature and degree of fermentation.

2. Waste stabilisation plant as claimed in claim 1, **characterised in that** it includes fourth sensor means (32) which are designed to detect the carbon dioxide present in the air aspirated downstream of the stratified waste in each sector, and are connected to said computerized control unit (21).

3. Waste stabilisation plant as claimed in claim 1, **characterised in that** it includes fifth sensor means (33) which are designed to detect the oxygen present in the air aspirated downstream of the waste stratified in each sector, and are connected to said computerized control unit (21).

4. Waste stabilisation plant as claimed in claim 1, 2 or 3, **characterised in that** said computerized control unit (21) comprises at least one process calculator (22) designed to operate according to a pre-determined algorithm and connected to implementation and control means associated with said crushing means (5), said handling means (7, 8, 9) and said suction means (13, 13', 13"...).

5. Waste stabilisation plant as claimed in one or more of the preceding claims, **characterised in that** said support surface (16) comprises modular elements which contain said openings and rest on fixed supports (17, 17', 17"...) which are installed at a pre-determined height above ground.

6. Waste stabilisation plant as claimed in one or more of the preceding claims, **characterised in that** said support surface demarcates suction cells (18, 18', 18" ...), associated with said suction means (13, 13'13'...), at the top.

7. Waste stabilisation plant as claimed in one or more of the preceding claims, **characterised in that** said fixed supports (17, 17', 17"...) comprise a plurality of walls or equivalent structures which extend substantially parallel to one another and demarcate said suction cells (18, 18', 18''...).

8. Waste stabilisation plant as claimed in one or more of the preceding claims, **characterised in that** said aspiration means include at least one variable-speed fan (13, 13', 13''...), associated with speed regulation means, for each suction cell.

9. Waste stabilisation plant as claimed in one or more of the preceding claims, **characterised in that** it includes means (14) for mixing the air conveyed by said fans.

10. Waste stabilisation method comprising the following operational stages:

    a) coarse crushing of the waste
    b) deposit and stratification of crushed waste on a support surface (16) containing openings in a substantially closed fermentation chamber (3) with pre-determined dimensions;
    c) forced downward suction of air through said crushed waste W and the openings in said support surface (16) for fermentation and stabilisation of the waste;
    d) removal of stabilised waste;

    **characterised in that** said waste stabilization method is carried out batchwise by dividing said fermentation chamber (3) into a plurality of sectors (S, S', S",...) and operating each sector independently of the other sectors following the history waste arrival and deposition, the sequence of batch realizing a continuous operation with a continuous supply of waste and stabilized product removal,
    the method comprising the further stages of:

    e) detection of the temperature and humidity of the air upstream, and the temperature, humidity and flow rate of the air downstream of the waste stratified in each sector;
    f) processing said temperature, humidity and air flow values through an algorithm of a computer program for regulating the air flow rate and controlling the fermentation temperature in each sector accordingly, so as to accelerate fermentation of the waste on the basis of its composition, nature and degree of fermentation.

11. Waste stabilisation method as claimed in claim 10, **characterised in that** stage e) also includes detection of the carbon dioxide and/or oxygen concentration values in the air downstream of the stratified waste on said support surface.

12. Waste stabilisation method as claimed in claims 10 and 11, **characterized in that** said stage f) also includes the design of an algorithm to process said carbon dioxide and/or oxygen concentration values, regulate the air flow and control fermentation in each sector accordingly.

13. Waste stabilisation method as claimed in one or more of the preceding claims 10 to 12, **characterized in that** it also includes a waste crushing, deposit and handling control stage g) which is controlled by said computer program.

14. Waste stabilisation method as claimed in one or more of the preceding claims 10 to 13, **characterized in that** it also includes a stage h) involving storage by said computer program of the quantity, position and date of deposit of the layers of waste, and their height.

15. Waste stabilisation method as claimed in one or more of the preceding claims 10 to 14, **characterized in that** said waste deposit and stratification stage b) is effected in such a way as to form sections corresponding to suction cells (18) which are located under said support surface (16).

16. Waste stabilisation method as claimed in one or more of the preceding claims 10 to 15, **characterized in that** at least one stage m) of reversal of the layers controlled by said program is performed during said waste suction and fermentation stage c).

17. Waste stabilisation method as claimed in one or more of the preceding claims 10 to 16, **characterized in that** the air aspirated by said suction cells (18) is collected in a single manifold (14) for uniform feeding to biological filters (15).

18. Computer program designed to activate and control a waste stabilisation plant and method as claimed in one or more of the preceding claims, **characterised in that** it includes a first sub-routine to activate the movement of the overhead travelling cranes along axes X and Y and the movement of the grabs along axis Z, and a second sub-routine to activate and regulate fermentation, which includes one or more algorithms designed to regulate the air flow and control the fermentation temperature in each sector (S, S', S",...) by means of matter and/or enthalpy balances of fermentation.

19. Computer program as claimed in claim 18, **characterised in that** it includes one or more algorithms designed to regulate the air flow and control the fermentation temperature in each sector and consequently optimize management of fermentation.

20. Stabilised waste, **characterised in that** it is obtained with a plant and method as claimed in one or more of the preceding claims, by means of aerobic fermentation on the basis of the composition, nature and degree of fermentation, and by means of the passage of forced air with a flow rate regulated by processing of the temperature, humidity and air flow values upstream and downstream of the layers of waste **in each sector (S, S', S",...)** in order to control the fermentation temperature.

21. Stabilised waste as claimed in claim 19, **characterised in that** it contains moisture of under 16% in weight, net heat value of over 17000 kJ/kg (4000 kcal/kg), and a bacteria count of under $10^5$ N/g.

**Patentansprüche**

1. Anlage zum biologischen Haltbarmachen gärungsfähigen Abfalls, umfassend:

   - eine Gärungskammer (3) mit vorbestimmten Abmessungen, welche im Wesentlichen geschlossen ist;
   - eine Tragefläche (16), welche in Abschnitte (S, S', S"...) unterteilt ist und welche für eine geschichtete Ablagerung von Abfall (W) in der Kammer (3) angeordnet ist, wobei die Tragefläche (16) Öffnungen enthält, welche gleichmäßig in den Abschnitten (S, S', S"...) für die Durchführung von Luft verteilt sind;
   - Mittel (5) zum groben Zerkleinern des Abfalls (W);
   - Mittel (7, 8, 9) für eine Ablagerung des zerkleinerten Abfalls auf der Tragefläche (16) in jedem Abschnitt und für den Transport des Abfalls zwischen den verschiedenen Abschnitten (S, S', S"...) und zwischen den verschiedenen Bereichen der Anlage;
- Mittel (13, 13', 13"...) zum Ansaugen von Luft von oben und zum Befördern dieser durch die Öffnungen in der Tragefläche (16), so dass die Luft durch den geschichteten Abfall auf der Fläche geführt wird und seine erzwungene Gärung fördert;
- Mittel zur Regelung der Strömungsrate der Luft, welche in jeden Abschnitt (S, S', S"...) gesaugt wird;

wobei die Anlage darüber hinaus aufweist erste Sensormittel zur Erfassung der Temperatur der Luft, welche von dem geschichteten Abfall in jedem Abschnitt nach oben (34) und nach unten (29) gesaugt wird, zweite Sensormittel zur Erfassung der Feuchtigkeit der Luft, welche von dem geschichteten Abfall in jedem Abschnitt nach oben (35) und nach unten (30) gesaugt wird, dritte Sensormittel (31) zur Erfassung der von dem Abfall nach unten strömenden Luftströmungsrate in jedem Abschnitt, eine computergestützte Steuereinheit (21), welche entworfen ist, um die Signale, welche von den ersten, den zweiten und den dritten Sensormitteln stammen, zu verarbeiten und um die Mittel zur Regelung des Luftstroms in jedem Abschnitt zu steuern, ein geeignetes Programm, welches in der computergestützten Steuereinheit (21) installiert ist, um automatisch die Mittel zur Regelung der Luftströmungsrate zu steuern und um die Gärungstemperatur (T) in jedem Abschnitt entsprechend zu steuern, um so die Gärung des Abfalls abhängig von seiner Zusammensetzung, Beschaffenheit und seinem Gärungsgrad zu beschleunigen.

2. Anlage zum Haltbarmachen von Abfall nach Anspruch 1, **dadurch gekennzeichnet, dass** sie vierte Sensormittel (32) umfasst, welche ausgestaltet sind, um Kohlendioxyd zu erfassen, welches in der Luft vorhanden ist, welche von dem geschichteten Abfall in jedem Abschnitt nach unten gesaugt wird, und welche mit der computergestützten Steuereinheit (21) verbunden sind.

3. Anlage zum Haltbarmachen von Abfall nach Anspruch 1, **dadurch gekennzeichnet, dass** sie fünfte Sensormittel (33) umfasst, welche ausgestaltet sind, um Sauerstoff zu erfassen, welcher in der Luft vorhanden ist, welche von dem geschichteten Abfall in jedem Abschnitt nach unten gesaugt wird, und welche mit der computergestützten Steuereinheit (21) verbunden sind.

4. Anlage zum Haltbarmachen von Abfall nach Anspruch 1, 2 oder 3, **dadurch gekennzeichnet, dass** die computergestützte Steuereinheit (21) mindestens einen Prozessrechner (22) umfasst, welcher ausgestaltet ist, um entsprechend einem vorbestimmten Algorithmus zu arbeiten, und welcher mit Implementierungs- und Steuermitteln verbunden ist, welche den Zerkleinerungsmittel (5), den Handhabungsmitteln (7, 8, 9) und den Saugmittein (13, 13', 13"...) zugeordnet sind.

5. Anlage zum Haltbarmachen von Abfall nach einem oder mehreren der vorhergehenden Ansprüche, **dadurch gekennzeichnet, dass** die Tragefläche (16) modulare Elemente umfasst, welche die Öffnungen enthalten und auf befestigten Stützen (17, 17', 17"...), welche in einer vorbestimmten Höhe über dem Boden angebracht sind, aufliegen.

6. Anlage zum Haltbarmachen von Abfall nach einem oder mehreren der vorhergehenden Ansprüche, **dadurch gekennzeichnet, dass** die Tragefläche oben Saugzellen (18, 18', 18"...) begrenzt, welche den Saugmitteln (13, 13', 13"...) zugeordnet sind.

7. Anlage zum Haltbarmachen von Abfall nach einem oder mehreren der vorhergehenden Ansprüche, **dadurch gekennzeichnet, dass** die befestigten Stützen (17, 17', 17"...) mehrere Wände oder äquivalente Strukturen, welche sich im Wesentlichen parallel zueinander erstrecken und die Saugzellen (18, 18', 18"...) begrenzen, umfasst.

8. Anlage zum Haltbarmachen von Abfall nach einem oder mehreren der vorhergehenden Ansprüche, **dadurch gekennzeichnet, dass** die Saugmittel mindestens einen Lüfter (13, 13', 13"...) mit einer variablen Geschwindigkeit für jede Saugzelle, welcher Mitteln zum Regeln der Geschwindigkeit zugeordnet ist, umfassen.

9. Anlage zum Haltbarmachen von Abfall nach einem oder mehreren der vorhergehenden Ansprüche, **dadurch gekennzeichnet, dass** sie Mittel (14) zum Mischen der Luft, welche durch die Lüfter zugeführt wird, umfasst.

10. Verfahren zum Haltbarmachen von Abfall, welches die folgenden operativen Schritte umfasst:

a) grobes Zerkleinern des Abfalls,
b) Ablagern und Schichten des zerkleinerten Abfalls auf einer Tragefläche (16), welche Öffnungen enthält, in einer im Wesentlichen geschlossenen Gärungskammer (3) mit vorbestimmten Abmessungen;
c) erzwungenes abwärtsgerichtetes Ansaugen von Luft durch den zerkleinerten Abfall (W) und die Öffnungen in der Tragefläche (16) zur Gärung und zum Haltbarmachen des Abfalls;
d) Entfernen des haltbar gemachten Abfalls;

**dadurch gekennzeichnet, dass** das Verfahren zum Haltbarmachen von Abfall chargenweise ausgeführt wird, indem die Gärungskammer (3) in mehrere Abschnitte (S, S', S"...) unterteilt wird und indem jeder Abschnitt unabhängig von den anderen Abschnitten betrieben wird, welche im zeitlichen Verlauf eines Eintreffens und Ablagerns von Abfall, folgen, wobei die Folge der Chargen einen kontinuierlichen Betrieb mit einer kontinuierlichen Zuführung von Abfall und einem Entfernen des haltbar gemachten Abfalls realisiert,
wobei das Verfahren die folgenden weiteren Schritte umfasst:

e) Erfassen der Temperatur und der Feuchtigkeit der aufwärts strömenden Luft und der Temperatur, Feuchtigkeit und Strömungsrate der Luft, welche von dem in jedem Abschnitt geschichteten Abfall nach unten strömt;
f) Verarbeiten der Temperatur-, Feuchtigkeits- und Luftstromwerte durch einen Algorithmus eines Computerprogramms, um die Luftströmungsrate zu regeln und die Gärungstemperatur in jedem Abschnitt entsprechend zu steuern, um die Gärung des Abfalls abhängig von seiner Zusammensetzung, Beschaffenheit und seinem Gärungsgrad zu beschleunigen.

**11.** Verfahren zum Haltbarmachen von Abfall nach Anspruch 10, **dadurch** gekennkennzeichnet, dass der Schritt e) auch ein Erfassen der Kohlendioxyd- und/oder der Sauerstoff-Konzentrationswerte in der Luft, welche von dem geschichteten Abfall auf der Tragefläche nach unten strömt, umfasst.

**12.** Verfahren zum Haltbarmachen von Abfall nach den Ansprüche 10 und 11, **dadurch gekennzeichnet, dass** der Schritt f) auch den Entwurf eines Algorithmus umfasst, um die Kohlendioxyd- und/oder Sauerstoff-Konzentrationswerte zu verarbeiten, um den Luftstrom zu regeln und die Gärung in jedem Abschnitt entsprechend zu steuern.

**13.** Verfahren zum Haltbarmachen von Abfall nach einem oder mehreren der vorhergehenden Ansprüche 10 bis 12, **dadurch gekennzeichnet, dass** es auch einen Steuerungsschritt g) zur Zerkleinerung des Abfalls, zur Ablagerung des Abfalls und zur Bearbeitung des Abfalls umfasst, welcher durch das Computerprogramm gesteuert wird.

**14.** Verfahren zum Haltbarmachen von Abfall nach einem oder mehreren der vorhergehenden Ansprüche 10 bis 13, **dadurch gekennzeichnet, dass** es auch einen Schritt h) umfasst, welcher das Abspeichern der Menge, der Position und des Datums der Ablagerung der Schichten des Abfalls und ihrer Höhe durch das Computerprogramm umfasst.

**15.** Verfahren zum Haltbarmachen von Abfall nach einem oder mehreren der vorhergehenden Ansprüche 10 bis 14, **dadurch gekennzeichnet, dass** der Schritt b) des Ablagerns und Schichtens von Abfall in solch einer Weise ausgeführt wird, dass Abschnitte, welche mit Saugzellen (18) korrespondieren, die unter der Tragefläche (16) angeordnet sind, ausgebildet werden.

**16.** Verfahren zum Haltbarmachen von Abfall nach einem oder mehreren der vorhergehenden Ansprüche 10 bis 15, **dadurch gekennzeichnet, dass** zumindest ein Schritt m) eines Wendens der Schichten, welcher durch das Programm gesteuert wird, während des Schrittes c) des Ansaugens und Gärens durchgeführt wird.

**17.** Verfahren zum Haltbarmachen von Abfall nach einem oder mehreren der vorhergehenden Ansprüche 10 bis 16, **dadurch gekennzeichnet, dass** die Luft, welche durch die Saugzellen (18) angesaugt wird, in einer einzigen Sammelleitung (14) gesammelt wird, um sie gleichmäßig biologischen Filtern (15) zuzuführen.

**18.** Computerprogramm, welches entworfen ist, um eine Anlage und ein Verfahren zum Haltbarmachen von Abfall nach einem oder mehreren der vorhergehenden Ansprüche zu aktivieren und zu steuern, **dadurch gekennzeichnet, dass** es umfasst ein erstes Unterprogramm, um die Bewegung der sich oberhalb bewegenden Kräne entlang einer X- und Y-Achse und die Bewegung der Greifer entlang einer Z-Achse auszulösen, und ein zweites Unterprogramm, um eine Gärung auszulösen und zu regeln, was ein oder mehrere Algorithmen umfasst, welche entworfen sind, um den Luftstrom und die Gärungstemperatur in jedem Abschnitt (S, S', S"...) mittels Substanz- und/oder Enthalpie-Gärungsbilanzen zu steuern.

**19.** Computerprogramm nach Anspruch 18, **dadurch gekennzeichnet, dass** es einen oder mehrere Algorithmen umfasst, welche entworfen sind, um den Luftstrom zu regeln und die Gärungstemperatur in jedem Abschnitt zu steuern und folglich die Handhabung der Gärung zu optimieren.

20. Haltbar gemachter Abfall, **dadurch gekennzeichnet, dass** er mit einer Anlage und mit einem Verfahren nach einem oder mehreren der vorhergehenden Ansprüche, mittels einer aerobischen Gärung auf der Grundlage der Zusammensetzung, Beschaffenheit und dem Gärungszustand und mittels der Durchführung eines erzwungenen Luftstroms mit einer Strömungsrate erhalten wird, welche geregelt wird, indem die Temperatur-, Feuchtigkeits- und Luftstromwerte, welcher von den Schichten des Abfalls in jedem Abschnitt (S, S', 5"...) nach oben und nach unten strömt, verarbeitet werden, um die Gärungstemperatur zu steuern.

21. Haltbar gemachter Abfall nach Anspruch 19, **dadurch gekennzeichnet, dass** er eine Feuchte von weniger als 16 Gewichtsprozent, einen Heizwert von über 17.000 kJ/kg (4.000 kcal/kg) und eine Bakterienzahl von unter $10^5$ N/g aufweist.

**Revendications**

1. Installation pour la stabilisation biologique de déchets fermentescibles, comprenant :

   - une chambre de fermentation (3) qui est substantiellement fermée, avec des dimensions prédéterminées ;
   - une surface de support (16) divisée en secteurs (S, S', S", ...) qui est positionnée dans ladite chambre (3) pour le dépôt stratifié des déchets (W), ladite surface de support (16) contient des ouvertures réparties uniformément dans lesdits secteurs (S, S', S",...) pour le passage de l'air ;
   - des moyens (5) pour le broyage grossier des déchets (W) ;
   - des moyens (7, 8, 9) pour déposer les déchets broyés sur ladite surface de support (16) dans chaque secteur et pour transférer les déchets entre les différents secteurs (S, S', S",...) et entre les différentes zones de l'installation ;
   - des moyens (13, 13', 13",...) pour aspirer l'air de dessus et le transporter travers les ouvertures dans ladite surface de support (16) de sorte que l'air passe par les déchets stratifiés sur ladite surface et favorise leur fermentation forcée ;
   - des moyens pour réguler le débit de l'air aspiré dans chaque secteur (S, S', S",...) ;

   ladite installation comprenant en outre des premiers moyens capteurs pour détecter la température de l'air aspiré en amont (34) et en aval (29) des déchets stratifiés dans chaque secteur, des deuxièmes moyenscapteurs pour détecter l'humidité de l'air aspiré en amont (35) et en aval (30) des déchets stratifiés dans chaque secteur, des troisièmes moyens capteurs (31) pour la détection du débit d'air en aval des déchets dans chaque secteur, une unité de contrôle informatisée (21) conçue pour traiter les signaux provenant desdits premier, deuxième et troisième moyens capteurs et pour lesdits moyens de régulation de débit d'air dans chaque secteur, un programme approprié étant installé dans ladite unité de contrôle informatisée (21) pour contrôler automatiquement lesdits moyens de régulation de débit d'air et contrôler la température de fermentation (T) dans chaque secteur en conséquence, afin d'accélérer la fermentation des déchets en fonction de leur composition, de leur nature et de leur degré de fermentation.

2. Installation de stabilisation de déchets selon la revendication 1, **caractérisée en ce qu'**elle comprend des quatrièmes moyens capteurs (32) qui sont conçus pour détecter le dioxyde de carbone présent dans l'air aspiré en aval des déchets stratifiés dans chaque secteur, et sont raccordés à ladite unité de contrôle informatisée (21).

3. Installation de stabilisation de déchets selon la revendication 1, **caractérisée en ce qu'**elle comprend des cinquièmes moyens capteurs (33) qui sont conçus pour détecter l'oxygène présent dans l'air aspiré en aval des déchets stratifiés dans chaque secteur, et sont raccordés à ladite unité de contrôle informatisée (21).

4. Installation de stabilisation de déchets selon la revendication 1, 2 ou 3, **caractérisée en ce que** ladite unité de contrôle informatisée (21) comprend au moins un calculateur de traitement (22) conçu pour fonctionner selon un algorithme prédéterminé et raccordé aux moyens de mise en oeuvre et de contrôle associés auxdits moyens de broyage (5), auxdits moyens de manipulation (7, 8, 9) et auxdits moyens d'aspiration (13, 13', 13"...).

5. Installation de stabilisation de déchets selon une ou plusieurs des revendications précédentes, **caractérisée en ce que** ladite surface de support (16) comprend des éléments modulaires qui contiennent lesdites ouvertures et reposent sur des supports fixes (17, 17', 17"...) qui sont installés à une hauteur prédéterminée au-dessus du sol.

6. Installation de stabilisation de déchets selon une ou plusieurs des revendications précédentes, **caractérisée en ce**

**que** ladite surface de support délimite des cellules d'aspiration (18, 18', 18"...), associées auxdits moyens d'aspiration (13, 13', 13"...) au niveau de la partie supérieure.

7. Installation de stabilisation de déchets selon une ou plusieurs des revendications précédentes, **caractérisée en ce que** lesdits supports fixes (17, 17', 17"...) comprennent une pluralité de parois ou de structures équivalentes qui s'étendent de manière substantiellement parallèle entre elles et délimitent lesdites cellules d'aspiration (18, 18', 18"...).

8. Installation de stabilisation de déchets selon une ou plusieurs des revendications précédentes, **caractérisée en ce que** lesdits moyens d'aspiration comprennent au moins un ventilateur à vitesse variable (13, 13', 13" ...), associé à des moyens de régulation de vitesse, pour chaque cellule d'aspiration.

9. Installation de stabilisation de déchets selon une ou plusieurs des revendications précédentes, **caractérisée en ce qu'**elle comprend des moyens (14) pour mélanger l'air transporté par lesdits ventilateurs.

10. Procédé de stabilisation de déchets comprenant les étapes opérationnelles suivantes consistant à :

    a) broyer grossièrement les déchets
    b) déposer et stratifier les déchets broyés sur une surface de support (16) contenant des ouvertures dans une chambre de fermentation (3) substantiellement fermée avec des dimensions prédéterminées ;
    c) aspirer l'air de force de haut en bas à travers lesdits déchets broyés W et les ouvertures dans ladite surface de support (16) pour la fermentation et la stabilisation des déchets ;
    d) retirer les déchets stabilisés ;

    **caractérisé en ce que** ledit procédé de stabilisation de déchets est réalisé par lot en divisant ladite chambre de fermentation (3) en une pluralité de secteurs (S, S', S",...) et en faisant fonctionner chaque secteur indépendamment des autres secteurs suite à l'historique d'arrivée et de dépôt des déchets, la séquence de lot réalisant un fonctionnement continu avec une alimentation de déchets continue et un retrait de produit stabilisé,
    le procédé comprenant les étapes additionnelles consistant à :

    e) détecter la température et l'humidité de l'air en amont, et la température, l'humidité et le débit de l'air en aval du déchet stratifié dans chaque secteur ;
    f) traiter lesdites valeurs de température, d'humidité et de débit d'air par le biais d'un algorithme d'un programme informatique pour réguler le débit d'air et contrôler la température de fermentation dans chaque secteur en conséquence, afin d'accélérer la fermentation des déchets en fonction de leur composition, de leur nature et de leur degré de fermentation.

11. Procédé de stabilisation de déchets selon la revendication 10, **caractérisé en ce que** l'étape e) comprend également l'étape consistant à détecter les valeurs de concentration de dioxyde de carbone et/ou d'oxygène dans l'air en aval des déchets stratifiés sur ladite surface de support.

12. Procédé de stabilisation de déchets selon les revendications 10 et 11, **caractérisé en ce que** ladite étape f) comprend également l'étape consistant à concevoir un algorithme pour traiter lesdites valeurs de concentration de dioxyde de carbone et/ou d'oxygène, réguler le débit d'air et contrôler la fermentation dans chaque secteur, en conséquence.

13. Procédé de stabilisation de déchets selon l'une ou plusieurs des revendications 10 à 12 précédentes, **caractérisé en ce qu'**il comprend également une étape g) de broyage de déchets, de dépôt et de contrôle de manipulation qui est contrôlée par ledit programme informatique.

14. Procédé de stabilisation de déchets selon l'une ou plusieurs des revendications 10 à 13 précédentes, **caractérisé en ce qu'**il comprend également une étape h) impliquant la mémorisation par ledit programme informatique de la quantité, de la position et de la date de dépôt des couches de déchets, et leur hauteur.

15. Procédé de stabilisation de déchets selon l'une ou plusieurs des revendications 10 à 14 précédentes, **caractérisé en ce que** ladite étape b) de dépôt et de stratification de déchets est effectuée de manière à former des sections correspondant aux cellules d'aspiration (18) qui sont positionnées sous ladite surface de support (16).

**16.** Procédé de stabilisation de déchets selon l'une ou plusieurs des revendications 10 à 15 précédentes, **caractérisé en ce qu'**au moins une étape m) d'inversion des couches contrôlée par ledit programme est réalisée pendant ladite étape c) d'aspiration et de fermentation de déchets.

**17.** Procédé de stabilisation de déchets selon l'une ou plusieurs des revendications 10 à 16 précédentes, **caractérisé en ce que** l'air aspiré par lesdites cellules d'aspiration (18) est collecté dans un seul collecteur (14) pour alimenter de manière uniforme des filtres biologiques (15).

**18.** Programme informatique conçu pour activer et contrôler une installation et un procédé de stabilisation de déchets selon l'une ou plusieurs des revendications précédentes, **caractérisé en ce qu'**il comprend une première sous-routine pour activer le mouvement des grues aériennes se déplaçant le long des axes X et Y et le mouvement des grappins le long de l'axe Z, et une deuxième sous-routine pour activer et réguler la fermentation, qui comprend un ou plusieurs algorithmes conçus pour réguler l'écoulement d'air et contrôler la température de fermentation dans chaque secteur (S, S', S",...) au moyen de bilans de matière et/ou d'enthalpie de la fermentation.

**19.** Programme informatique selon la revendication 18, **caractérisé en ce qu'**il comprend un ou plusieurs algorithmes conçus pour réguler l'écoulement d'air et contrôler la température de fermentation dans chaque secteur et par conséquent optimiser la gestion de la fermentation.

**20.** Déchets stabilisés, **caractérisés en ce qu'**ils sont obtenus avec une installation et un procédé selon l'une ou plusieurs des revendications précédentes, au moyen de la fermentation aérobie en fonction de la composition, de la nature et du degré de fermentation, et au moyen du passage de l'air forcé avec un débit régulé en traitant les valeurs de température, d'humidité et d'écoulement d'air en amont et en aval des couches de déchets dans chaque secteur (S, S', S",...) afin de contrôler la température de fermentation.

**21.** Déchets stabilisés selon la revendication 19, **caractérisés en ce qu'**ils contiennent une valeur d'humidité inférieure à 16 % en poids, un pouvoir calorifique net supérieur à 17 000 kJ/kg (4 000 kcal/kg) et une charge bactérienne inférieure à $10^5$ N/g.

Fig. 1

```
┌─────────────────────────────────────────────┐
│              Arrival of waste                 │
└─────────────────────────────────────────────┘
                      │
                      ▼
┌─────────────────────────────────────────────┐
│           Deposit in loading tank             │
└─────────────────────────────────────────────┘
                      │
                      ▼
┌─────────────────────────────────────────────┐
│     Material picked up from unloading area    │
│           and fed to crusher hopper           │
└─────────────────────────────────────────────┘
                      │
                      ▼
┌─────────────────────────────────────────────┐
│                  Crushing                     │
└─────────────────────────────────────────────┘
                      │
                      ▼
┌─────────────────────────────────────────────┐
│             Intermediate storage              │
└─────────────────────────────────────────────┘
                      │
                      ▼
┌─────────────────────────────────────────────┐
│        Crushed waste picked up with grab      │
└─────────────────────────────────────────────┘
                      │
                      ▼
┌─────────────────────────────────────────────┐
│       Waste positioned next to previous waste │
└─────────────────────────────────────────────┘
                      │
                      ▼
┌─────────────────────────────────────────────┐
│              Completion of strip              │
└─────────────────────────────────────────────┘
                      │
                      ▼
┌─────────────────────────────────────────────┐
│   Start-up of fan. Start of forced fermentation│
└─────────────────────────────────────────────┘
                      │
                      ▼
┌─────────────────────────────────────────────┐
│             Forced fermentation               │
└─────────────────────────────────────────────┘
                      │
                      ▼
┌─────────────────────────────────────────────┐
│           Reversal of stratigraphy            │
└─────────────────────────────────────────────┘
                      │
                      ▼
┌─────────────────────────────────────────────┐
│             End of fermentation               │
└─────────────────────────────────────────────┘
                      │
                      ▼
┌─────────────────────────────────────────────┐
│          Removal of stabilised waste          │
└─────────────────────────────────────────────┘
```

*FIG. 2*

FIG. 3

Air

| Temperature °C | $T_1$ |
| Flow rate (m/sec) | $Q_1$ |
| Humidity (fraction/weight) | $U_1$ |

Waste pile
h (m)
$\rho_s$ Kg(m3)
$C_{ps}$
U (weight fraction)
T (°C)
$\Delta H$
R

Air

| Temperature °C | $T_2$ |
| Flow rate (m/sec) | $Q_2$ |
| Humidity (fraction/weight) | $U_2$ |
| Density | $\rho_g$ |
| Specific heat | $C_{pg}$ |

*FIG. 4*

START
t = 0     Q = Q₀ ——51

t = t÷dt
Detection of $T_1$, $U_1$, $T_2$, $U_2$ ——52
calculation of Q     setting of Q

53

$T_2 > T_{sup}$ $T_2 < T_{min}$
REACTIVITY
CALCULATION
R          $\Delta H$

SIGNALS AND ALARMS
$Q_2 > Q_{max}$  $Q_2 < Q_{min}$
$|T_{sup} - T_2| > T_2/10$

$P_2 < P_{2min}$
pile
movement

REACTIVITY CALCULATION ——54
R          $\Delta H$

55

OPERATION at assigned $T_2$
(e.g. biostabilisation
$T_2 = 0.9 T_{sup}$)
Calculation of $Q_2$, $P_2$
$Q_2 < Q_{2max}$, $P_2 < P_{2max}$

OPERATION at assigned $Q_2$
(e.g. biodrying
$Q_2 = 0.9 Q_{2max}$)
Calculation of $T_2$, $P_2$
$T_2 < T_{2max}$, $P_2 < P_{2max}$

56

OPERATION at optimised
$Q_2$, $T_2$
e.g. $Max_{(Q_2)} \int (Q(U_2 - U_1)) dt$
$T_2 < T_{2max}$, $P_2 < P_{2max}$
$Q_2 < Q_{2max}$

57

SETTING of calculated $Q_2$
Balances
Evaporated water
Weight loss of solids ——58
Energy consumed

NO ← Weight loss > 35%

59

YES

UNLOADING

*FIG. 5*

21

*FIG. 6*

**EP 1 386 675 B1**

**Patent documents cited in the description**

- EP 706839 A
- FR 2812570
- IT 1283805
- IT 1297234